# EUROPEAN PATENT SPECIFICATION

(11) **EP 3 902 160 B1**
(45) Date of publication and mention of the grant of the patent: **06.11.2024**
(21) Application number: 21169475.7
(22) Date of filing: 20.04.2021
(51) Int. Cl.: H04B 10/278, H04L 12/10, H04L 12/40

(54) **SHIPBOARD TELECOMMUNICATIONS NETWORK AND SHIP COMPRISING SUCH TELECOMMUNICATIONS NETWORK**
TELEKOMMUNIKATIONSNETZWERK AN BORD EINES SCHIFFS UND SCHIFF MIT EINEM SOLCHEN TELEKOMMUNIKATIONSNETZWERK
RÉSEAU DE TÉLÉCOMMUNICATIONS EMBARQUÉ ET NAVIRE COMPORTANT UN TEL RÉSEAU DE TÉLÉCOMMUNICATIONS

(30) Priority: 22.04.2020 IT 202000008635
(43) Date of publication of application: 27.10.2021
(73) Proprietor: Fincantieri S.p.A., 34121 Trieste (IT)
(72) Inventor: LENARDON, Matteo, I-34121 TRIESTE (IT)
(74) Representative: Mozzi, Matteo

(56) References cited:
- EP-A1- 1 463 219
- WO-A1-2020/031477
- US-A1- 2009 269 062

## Description

### Field of the invention

The present invention relates to the naval sector, in particular to a shipboard telecommunications network and a ship comprising such telecommunications network.

### Technological background of the invention

Nowadays, a shipboard telecommunications network is a very important aspect in a ship, since allowing communication among most, if not all, the different areas of a ship, whether they are accommodation areas (cabins) or non-accommodation areas (engine rooms, decks, hold), is now a fundamental requirement in terms of efficiency, safety and quality of the service offered.

However, being capable of reaching the different areas of a ship, even a very large one such as, for example, a cruise ship, requires a network architecture with very invasive cabling, especially in the accommodation areas which, including even hundreds of cabins, require long installation times and, at times, an excessive presence of intermediate distribution devices or panels, with a consequent increase in costs.

Furthermore, current telecommunications networks prevent even a late definition of the position/quantity of utilities, even in areas other than those intended for accommodation, thus showing little flexibility.

In addition, in the event of a failure, it still appears very difficult today to be provided with an adequate level of redundancy of the wired resources, so as to be capable of intervening promptly, but not too invasively, on the existing wiring.

Finally, current telecommunications networks, in the case of technological evolutions, have the major limitation of not being easily adaptable, if not by drastically intervening on the already installed shipboard architecture, possibly replacing devices and/or panels, if not even reviewing all the existing wiring, with certainly long intervention times and very high related costs.

In light of the above, the need is strongly felt to be provided with a shipboard telecommunications network which is as flexible as possible and easily adaptable to the number of utilities required, even if such number is defined only at the last moment, and which, at least in the immediate future, may easily, therefore at low costs, adapt to any technological evolution.
WO 2020/031477 A1 discloses an optical network system for short-range information communication in which control information is transmitted by an electric signal and information is transmitted by an optical signal.
EP 1463219 A1 discloses a watercraft having a number of control devices, signal devices and communication devices connected via a common optical network.
US 2009/269062 A1 discloses a ship including a network, integrating services for security and control services and/or for multimedia and infotainment services on board the ship.

### Summary

It is the object of the present invention to devise and provide a shipboard telecommunications network which allows to at least partially obviate the drawbacks mentioned above with reference to the prior art, in particular which is as flexible and redundant as possible, and capable of being adaptable also to a possible technological evolution in a short time, therefore at low costs.

Such object is achieved by means of a shipboard telecommunications network according to claim 1.

The present invention also relates to a ship comprising such telecommunications network.

### Brief description of the drawings

Further features and advantages of the shipboard telecommunications network and of such ship according to the invention will become apparent from the following description of preferred embodiments, given by way of indicative, non-limiting examples, with reference to the accompanying Figures, in which:
- Figure 1 diagrammatically shows an example of a ship in which a shipboard telecommunications network in accordance with the present invention may be used;
- Figure 2 shows, by means of a simplified block diagram, a shipboard telecommunications network according to the invention;
- Figures 3a, 3b and 3c show, by means of simplified block diagrams, a more detailed portion of the shipboard telecommunications network of Figure 2;
- Figure 4 shows, by means of a simplified block diagram, a connection mode between components already diagrammatically shown in Figures 3b and 3c;
- Figures 5a and 5b show, by means of simplified block diagrams, a further more detailed portion of the shipboard telecommunications network of Figure 2;
- Figure 6 shows an enlargement of a portion of the example of a ship of Figure 1, and
- Figure 7 represents the simplified block diagram of Figure 2 wherein some of the references used in Figure 6 have been added.

It should be noted that in the Figures the same or similar elements will be indicated with the same numeric or alphanumeric references.

### Detailed description

With reference to the above Figures, a shipboard telecommunications network according to the present invention is now described.

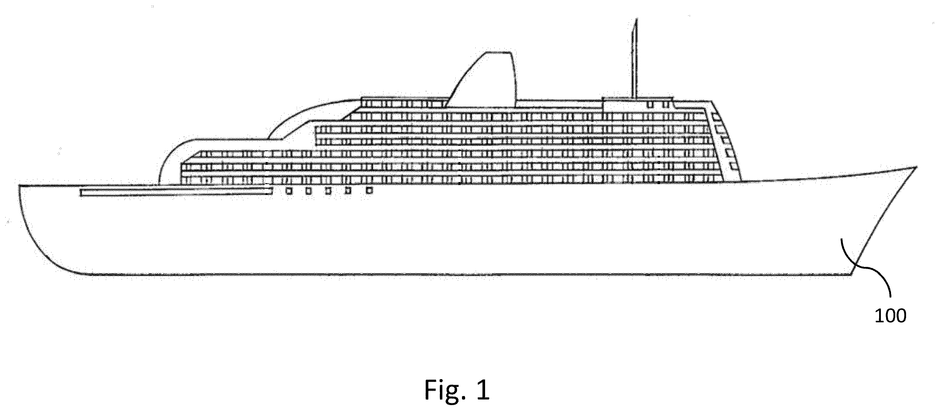

An example of a ship, indicated as a whole with reference numeral 100, is shown in Figure 1.

For the purposes of the present description, "ship" means any vessel which may be employed for cruise, recreational and tourist services, for example, a cruise ship, such as the one shown in Figure 1a, or any vessel which may be employed in the military sector.

The shipboard telecommunications network 1 is in fact installable on a ship 100.

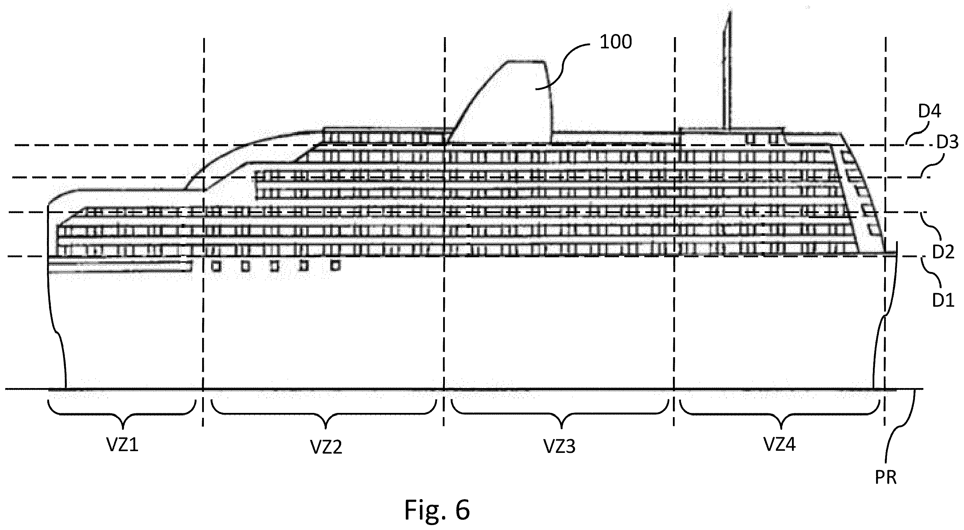

With particular reference to Figure 6, the ship 100 longitudinally extends parallel to a horizontal reference plane PR, for example a horizontal plane representative of the water body in which the ship 100 is immersed.

The ship 100 comprises a plurality of decks D1-D4 each of which longitudinally extend parallel to the horizontal reference plane PR of the ship 1.

Furthermore, the ship 100 comprises a plurality of vertical areas VZ1-VZ4 each of which extends along a direction which is substantially perpendicular to the horizontal reference plane PR parallel to which the ship 100 extends longitudinally.

The plurality of vertical areas VZ1-VZ4 are, for example, separated from one another by fireproof bulkheads.

Each deck of said plurality of decks D1-D4 extends parallel to the horizontal reference plane PR parallel to which the ship 100 extends longitudinally and comprises one or more vertical areas of said plurality of vertical areas VZ1-VZ4.

Each vertical area of said plurality of vertical areas VZ1-VZ4 extends along a direction which is substantially perpendicular to the horizontal reference plane PR parallel to which the ship 100 extends longitudinally and comprises one or more decks of said plurality of decks D1-D4.

In the Figures (with the exception of Figure 1), reference numeral 1 indicates, as a whole, a shipboard telecommunications network, hereinafter also just a telecommunications network or simply a network, in accordance with the invention.

The shipboard telecommunications network 1, as it will also be reiterated below, has a chain physical configuration and a star logic configuration.

Furthermore, the shipboard telecommunications network 1, from a physical point of view, extends vertically, along a direction which is substantially perpendicular to the horizontal reference plane PR parallel to which the ship 100 extends longitudinally, inside a vertical area of said plurality of vertical areas VZ1-VZ4, and extends horizontally, parallel to the horizontal reference plane PR parallel to which the ship 100 extends longitudinally, along the decks of said plurality of decks D1-D4 crossed by the vertical area inside which the telecommunications network 1 extends vertically.

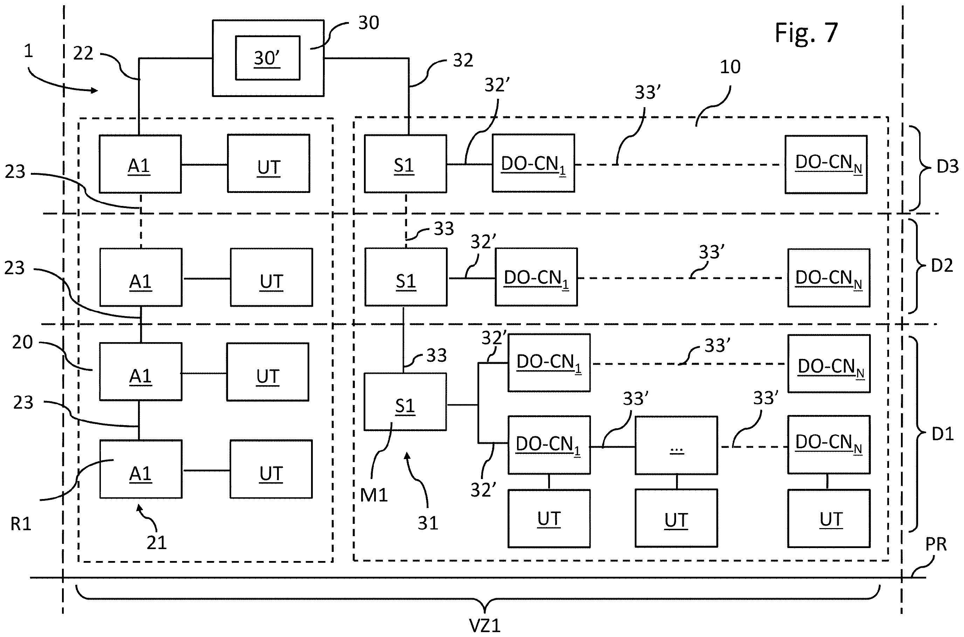

For example, with reference to Figure 7, the telecommunications network 1 extends vertically, along a direction which is substantially perpendicular to the horizontal reference plane PR parallel to which the ship 100 extends longitudinally, inside the vertical area VZ1 and extends horizontally, parallel to the horizontal reference plane PR, along decks D1, D2 and D3.

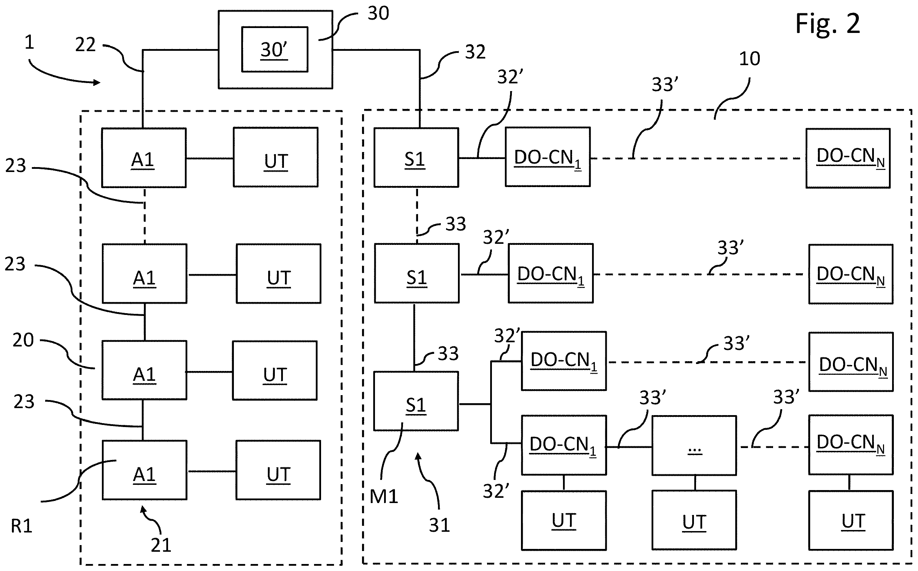

In accordance with an embodiment of the invention, with reference to Figure 2, the shipboard telecommunications network 1 connects one or more main distribution centers 30 with a plurality of utilities UT.

A main distribution center (hardware and software) contains the servers, the audio/video sources, the data processing terminals.

The utilities UT may be data sockets for PCs, Power Over Ethernet telephones and cameras (PoEs), Wi-Fi transmitters and, in general, any device which may normally be installed in the networks of a conventional ship.

In accordance with the invention, the telecommunications network 1 is a Passive Optical Network (PON).

The PON telecommunications network comprises only the portion of the integrated network from the main distribution centers 30 to the utilities UT, i.e., in particular, the backbone and the branches of the network.

The data center/s are not included in the telecommunications network.

In particular, the PON telecommunications network is implemented using the GPON/XG-PON/XGS-PON broadband fiber optic network technology with the addition of some conventional Local Area Network protocols (LAN).

With reference, in particular, to Figure 2, the network 1 comprises at least one optical fiber accommodation area local distribution network 10 operatively connected to a main distribution center 30 of a plurality of main distribution centers of the network 1.

It should be noted that, depending on the topology of the ship 100 and on the positioning of the plurality of main distribution centers 30, main distribution centers 30 without accommodation area local distribution networks 10 may exist, operationally connected thereto.

"Accommodation areas" means those areas of a ship in which there are passenger and/or crew cabins.

The plurality of distribution centers, not shown in the Figures with the exception of the main distribution center 30, is the so-called backbone of the shipboard telecommunications network 1.

The fiber optic backbone has a fiber optic mesh network topology in which each node is represented by a main distribution center of the plurality of distribution centers.

In the Figures, the fiber optic mesh network comprising the plurality of main distribution centers is not shown and the only component represented is a node represented by a distribution center indicated with reference numeral 30.

In this regard, each main distribution center is also known by the acronym MDF, from "Main Distribution Frame".

Each distribution center comprises at least one optical line terminal apparatus, also known by the acronym OLT, from "Optical Line Terminal".

In accordance with an embodiment, shown in Figure 2, in combination with the preceding one, the network 1 further comprises at least one no-accommodation area local distribution network 20, operatively connected to the main distribution center 30 of the plurality of network distribution centers 1.

"No-accommodation area" means one of those areas of a ship in which there are no accommodations (passenger and/or crew cabins), such as, for example, engine rooms, connecting decks, control rooms, the hold and so on.

It should be noted that, depending on the topology of the ship 100 and on the positioning of the plurality of main distribution centers 30, main distribution centers 30 without no-accommodation area local distribution networks 20 may exist, operationally connected thereto.

The at least one no-accommodation area local distribution network 20 will be described below.

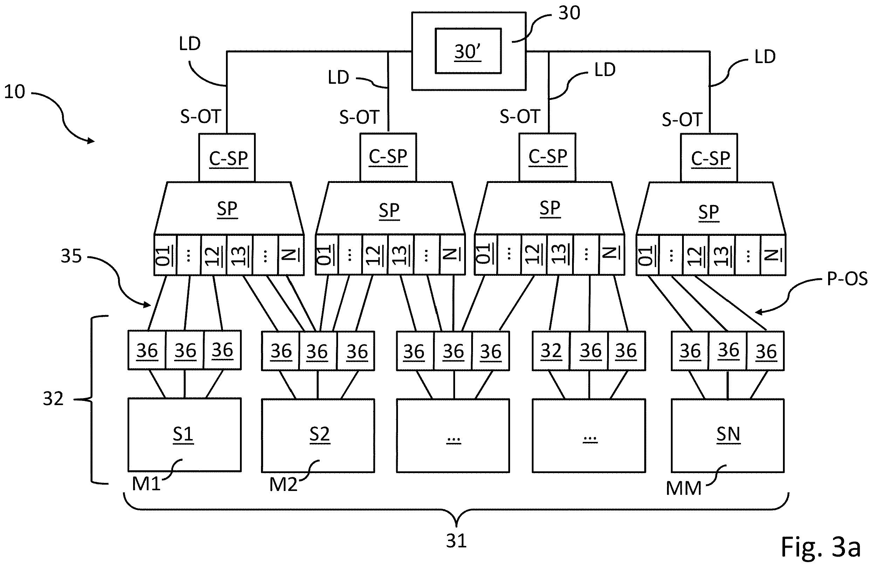

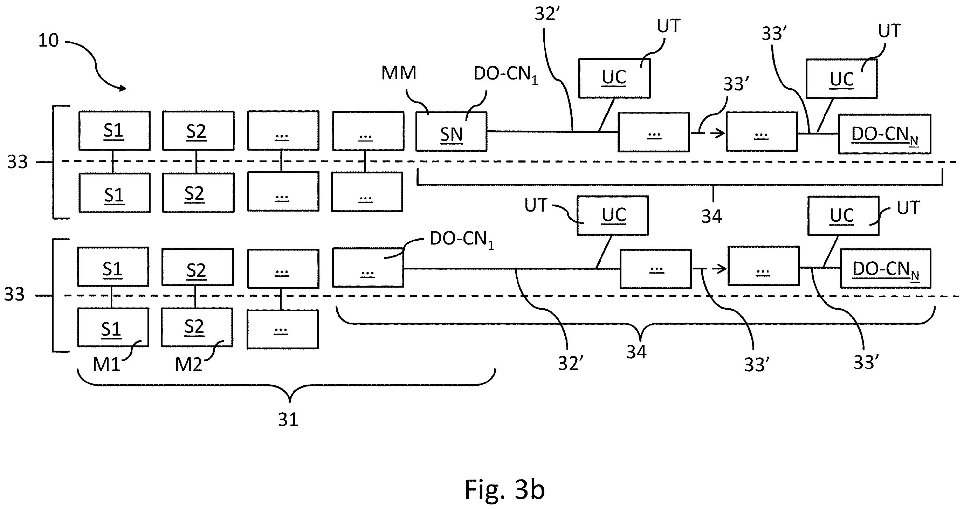

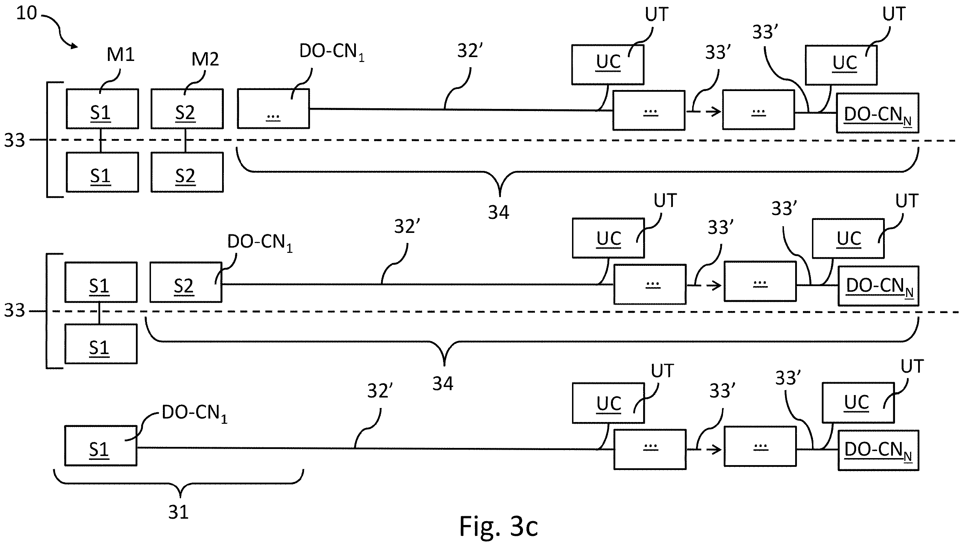

With reference now, in particular, also to Figures 3a, 3b and 3c, the at least one optical fiber accommodation area local distribution network 10 comprises a plurality of cabin deck distribution points 31, divided into sub-groups S1-SN.

These devices are also called ADP, from the acronym Accomodation deck Distribution Point.

Each sub-group of cabin deck distribution points 31 is distributed along a cabin vertical distribution upright M1-MM.

It should be noted that cabin vertical distribution upright M1-MM means an upright which extends vertically along a direction which is substantially perpendicular to the horizontal reference plane PR so as to reach more cabins of decks of said plurality of decks D1-D4 present inside the vertical area VZ1 inside which the telecommunications network 1 extends.

Therefore, the cabin vertical distribution upright M1-MM extends vertically along a direction which is substantially perpendicular to the horizontal reference plane PR parallel to which the ship 100, on which the network 1 is installable, extends longitudinally.

It should be noted that in Figure 2 only one cabin vertical upright M1 is shown comprising thereinside a sub-group S1 of cabin deck distribution points of the plurality of cabin deck distribution points 31.

In Figures 3a, 3b, 3c, five cabin vertical uprights M1, M2, ..., MM (being M=5) are shown, each comprising a respective sub-group, indicated with S1, S2, ..., SN (being N=5), of cabin deck distribution points of said plurality of cabin deck distribution points 31.

As shown in Figures 2 and 3a, a first cable 32 of each cabin vertical distribution upright M1-MM is operatively connected to the main distribution center 30 and ends on a first cabin deck distribution point of a respective sub-group S1-SN of cabin deck distribution points 31.

It should be noted that the first cable of a cabin vertical distribution upright is also called ARFC, from the acronym Accomodation Riser First Cable.

The cabin deck distribution points of a sub-group S1-SN of cabin deck distribution points are interconnected with one another by means of respective further cables 33 of cabin vertical distribution upright chain in a chain configuration in series (daisy chain physical configuration).

The further cables 33 of cabin vertical distribution upright chain vertically extend along a direction which is substantially perpendicular to the horizontal reference plane PR parallel to which the ship 100 extends longitudinally.

The further cables 33 of cabin vertical distribution upright chain are also called ARCC, from the acronym Accomodation Riser Chain Cable.

The further cables 33 of cabin vertical distribution upright chain are, for example, pre-connectorized 12 x MPO-MPO (from the acronym Multifiber Push On) or 12 x MTP-MTP (from the acronym Multifiber Termination Push on) with a set number of optical fibers available, as it will be described below with a numerical example.

It should be noted that, as it will be reiterated below, any excess optical fibers may be considered as spare.

The at least one optical fiber accommodation area local distribution network 10 further comprises at least one plurality 34 of horizontal cabin distribution points DO-CNⱼ, 1 < j < M.

It should be noted that plurality 34 of horizontal cabin distribution points DO-CNⱼ, 1 < j < M means a plurality of distribution points which extend horizontally, parallel to the horizontal reference plane PR, along a single deck between those located in the vertical area VZ1 inside which the telecommunications network 1 extends.

Therefore, the plurality 34 of horizontal cabin distribution points DO-CNⱼ, 1 < j < M, parallel extends with respect to the horizontal reference plane PR parallel to which the ship 100 extends longitudinally.

It should be noted that each horizontal cabin distribution point of said plurality 34 shows a technical cabin compartment in which a cabin distribution cabinet CDC (from the acronym, Cabin Distribution Cabinet) is provided, in turn comprising an optical network terminal apparatus ONT (from the English acronym, Optical Network Terminal).

Therefore, the input ports and output ports of an apparatus ONT are available for each horizontal cabin distribution point (technical compartment).

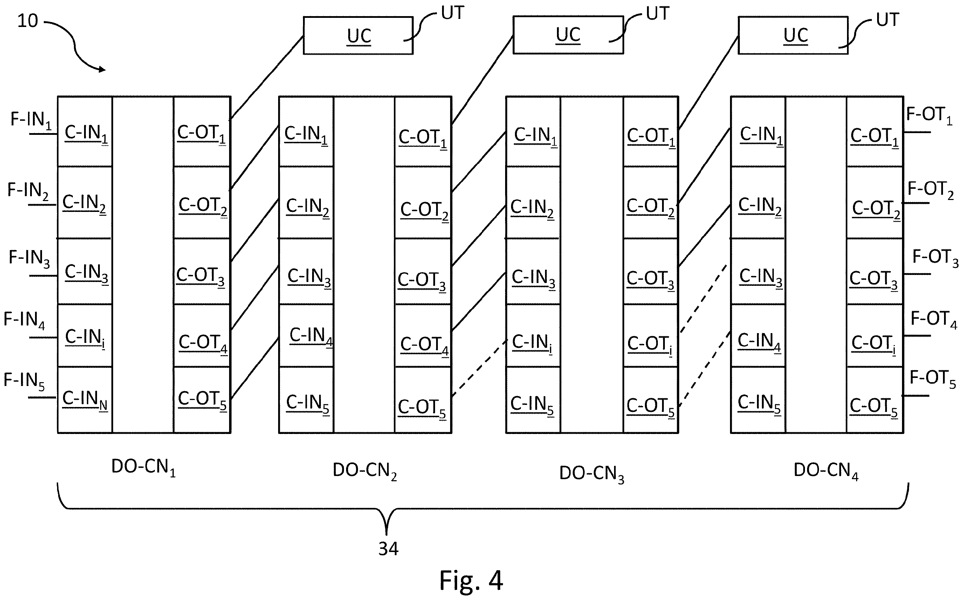

As it is now shown in Figure 4, each horizontal cabin distribution point DO-CNⱼ, 1 < j < M has a plurality of input optical fibers F-INᵢ, i < 1 < N, each entering a respective input connector of a plurality of input connectors C-INᵢ, 1 < i < N, and a second plurality of output optical fibers F-OTi, 1 < i < N, each exiting a respective output connector of a plurality of output connectors C-OTᵢ, 1 < i < N.

The first horizontal cabin distribution point DO-CN₁ corresponds to one of the cabin deck distribution points 31 whose plurality of input optical fibers F-INᵢ, i < 1 < N, is adapted to receive respective optical signals P-OS.

A horizontal cabin distribution point DO-CNⱼ, 1 < j < M of said plurality 34 has the first output optical fiber F-OT₁ connected to a connector UC of an utility UT arranged downstream so as to transport to the connector UC of an utility UT the optical signal received on the first input optical fiber F-IN₁.

The connector UC of an utility UT may be a connector of the SC type (Standard Connector) or of the LC type (Lucent Connector), depending on the type of connector provided at the input of the utility UT.

An utility UT is a cabin, in which normal LAN utilities, for example TVs, Telephones, WiFi Access Points or courtesy data sockets, may be connected downstream of an optical network terminal apparatus ONT connected to the input connector UC of an utility UT (connector of the SC type or of the LC type).

Furthermore, such horizontal cabin distribution point DO-CNⱼ, 1 < j < M of said plurality 34 has each of the subsequent output optical fibers F-OTᵢ, 2 < i < N (i.e., any of the optical fibers in addition to the first one), respectively connected to a respective input connector C-INᵢ₋₁, 2 < i < N of the horizontal cabin distribution point, arranged downstream so as to transport to the input connector C-INᵢ₋₁ of the horizontal cabin distribution point arranged downstream the optical signal received on the input optical fiber F-INᵢ, 1 < i < N.

In other words, the output fibers are staggered from time to time, passing from one horizontal cabin distribution point to the next one, namely:
- the first optical fiber is connected to the connector UC (of the SC type or of the LC type) of an utility UT;
- the second optical fiber, the third optical fiber, the fourth optical fiber, and so on, respectively become the first optical fiber, the second optical fiber, the third optical fiber, and so on, of the horizontal cabin distribution point arranged downstream.

Thereby, with the exception of the first horizontal cabin distribution point, which transports optical signals on all the respective output optical fibers, connecting them one after the other in the subsequent horizontal cabin distribution point, any other horizontal cabin distribution point has one or more disconnected output optical fibers which, although being connected, albeit one after the other, to the subsequent cabin distribution point, remain therefore unused, i.e., they do not transport any optical signal.

The spare optical fibers for the transport of optical signals represent redundancy optical fibers which may possibly be used in the event of a failure.

Ideally, the horizontal cabin distribution points (technical cabin compartments) connect the technical cabin compartments to one another (for example, in groups of a set maximum number of technical cabin compartments, for example, 12).

It should be noted that the first horizontal cabin distribution point DO-CN₁ (corresponding to one of the cabin deck distribution points 34) is connected to the second horizontal cabin distribution point DO-CN₂ by means of a first cabin horizontal distribution cable 32', also called AHFC (from the acronym, Accomodation Horizontal First Cable).

The following horizontal cabin distribution points DO-CNᵢ, 2 < i < N, are interconnected to one another by means of respective further cables 33' of horizontal distribution chain in a chain configuration in series, also called, a daisy chain.

The further cables 33' of horizontal distribution chain parallel extend with respect to the horizontal reference plane PR parallel to which the ship 100 extends longitudinally.

The further cables 33' of horizontal cabin distribution chain are also called AHCC, from the acronym Accomodation Horizontal Chain Cable.

With reference to Figure 4, in the case in which N=5 and M=4, it may be noticed that a horizontal cabin distribution point DO-CNⱼ, 1 < j < 4, of said plurality 34, for example the connector DO-CN₂, has the first output optical fiber F-OT₁ connected to a connector UC (for example, of the SC type or of the LC type) of an utility UT arranged downstream, so as to transport to the connector UC of an utility UT the optical signal received on the first input optical fiber FIN₁.

Furthermore, the horizontal cabin distribution point DO-CN₂, of said plurality 34 has each of the subsequent output optical fibers F-OTᵢ, 2 < i < N (i.e., any of the optical fibers in addition to the first one), respectively connected to a respective input connector C-INᵢ₋₁, 2 < i < N of the horizontal cabin distribution point, arranged downstream (DO-CNs) so as to transport to the input connector C-INᵢ₋₁ of the horizontal cabin distribution point arranged downstream (DO-CO₃) the optical signal received on the input optical fiber F-INᵢ, 1 < i < N.

In greater detail:
- the second output optical fiber F-OT₂ of DO-CN₂ is connected to the first input connector C-IN₁ of DO-CN₃ so as to transport to the first input connector C-IN₁ of DO-CN₃ the optical signal received on the first input optical fiber F-IN₁ of DO-CN₃;
- the third output optical fiber F-OT₃ of DO-CN₂ is connected to the second input connector C-IN₂ of DO-CN₃ so as to transport to the second input connector C-IN₂ of DO-CN₃ the optical signal received on the second input optical fiber F-IN₂ of DO-CN₃;
- the fourth output optical fiber F-OT₄ of DO-CN₂ is connected to the third input connector C-IN₃ of DO-CN₃ so as to transport to the third input connector C-IN₃ of DO-CN₃ the optical signal received on the third input optical fiber F-IN₃ of DO-CN₃;
- the fifth output optical fiber F-OT₅ of DO-CN₂ is connected to the fourth input connector C-IN₃, but it is not used for the transport of any optical signal received in input by the first horizontal cabin distribution point DO-CN₁.

In accordance with an embodiment, shown in Figure 3a, in combination with the preceding one, the at least one accommodation area local distribution network 10 comprises a plurality of splitters (optical dividers) SP operatively connected to the main distribution center 30.

Splitters are passive devices (i.e., they do not require an electrical power supply) capable of dividing an input optical fiber (or two input optical fibers) into several output optical fibers, symmetrically dividing the optical signal power.

A splitter, therefore, divides an input optical line (or two optical lines) into several secondary lines for the distribution towards other apparatuses, forming branches in cascade.

In greater detail, each splitter SP is adapted to receive in input, by means of a respective connector C-SP (or two connectors C-SP), for example of the SC (Standard Connector) or LC (Lucent Connector) type, a respective optical signal S-OT (or respective optical signals S-OT) distributed on a respective distribution line LD by an optical line terminal 30' (OLT) of the main distribution central 30.

Each splitter SP is adapted to divide the respective optical signal SOT (or the respective optical signals S-OT) received into a plurality of optical signals P-OS.

It should be noted that the division by each splitter SP occurs according to a ratio 1:N, in the case of an input optical fiber (or 2:N in the case of two input optical fibers), for example, being N=16.

Figure 3a shows a splitter SP having a division ratio 1:N, being N=16.

The plurality of optical signals P-OS provided by the plurality of splitters SP are spread over a plurality of optical fibers 35.

In accordance with an embodiment, in combination with the preceding one, shown in Figure 3a, the at least one optical fiber accommodation area local distribution network 10 further comprises a plurality of optical fiber grouping connections 36.

Each optical fiber grouping connection of said plurality of connections 36, for example, a pre-connectorized cable with a plurality of connectors of the SC type or of the LC type on one end and a connector of the MPO type or of the MTP type at the other end, groups in a group a set number of optical fibers of the plurality of optical fibers 35.

In particular, the grouping of optical fibers occurs only at the terminal of the optical fiber cable which is equipped with a number of connectors, each of which, in turn, groups a set number of optical fibers.

Therefore, each connector groups the optical fibers and only at the terminal of the optical fiber cable.

In the example in which each splitter has a division ratio 1:16, each optical fiber grouping connection groups 12 optical fibers in a group.

In fact, in this example, the connection is a 12 optical fiber connection 12LC-MPO.

With reference again to the embodiment described, the plurality of optical fiber grouping connections 36 is in turn grouped into sub-groups, each inside the respective first cable 32 of a cabin vertical distribution upright M1-MM.

As already mentioned above, the grouping of optical fibers is only at the terminal of an optical fiber cable and is linked to the fact that a finite number of single optical fibers may be inserted on the connectors present at the terminal of the optical fiber cable.

Therefore, the connectors present at the terminal of the optical fiber cable allow the grouping of the optical fibers.

Each sub-group of optical fiber grouping connections of said plurality of connections 32 comprises a set number of connections.

Therefore, each cable 32 of a cabin vertical distribution upright M1-MM has a set number of optical fibers available thereinside.

In the example in which each splitter has a division ratio 1:16 and in which each optical fiber grouping connection groups a group of 12 optical fibers, each sub-group of optical fiber grouping connections groups, for example, 12 optical fiber grouping connections.

Therefore, according to this example, each cable 32 of a cabin vertical distribution upright M1-MM has a total number of 144 optical fibers available.

According to this example, the further cables 33 of cabin vertical distribution upright chain are, for example, pre-connectorized 12 x MPO-MPO or 12 x MTP-MTP with 144 optical fibers available.

Any excess optical fibers may be considered as spare.

In accordance with a further embodiment, in combination with any of those described above, it is reiterated that the network 1 comprises at least one no-accommodation area local distribution network 20, operatively connected to the main distribution center 30 of the plurality of distribution centers of the network 1.

The at least one no-accommodation area local distribution network 20 comprises a plurality of no-accommodation area deck distribution cabinets 21, also called ODC, from the acronym Other area deck Distribution Cabinet), divided into sub-groups A1-AN.

It should be noted that each ODC comprises an Optical Network Unit (ONU).

Each sub-group of no-accommodation area deck distribution cabinets is distributed along a no-accommodation area vertical distribution upright R1-RN.

It should be noted that no-accommodation area vertical distribution upright R1-RN means an upright which extends vertically along a direction which is substantially perpendicular to the horizontal reference plane PR so as to reach more decks of said plurality of decks D1-D4 present in the vertical area VZ1 inside which the telecommunications network 1 extends.

Therefore, the no-accommodation area vertical distribution upright R1-RN vertically extends along a direction which is substantially perpendicular to the horizontal reference plane PR parallel to which the ship 100, on which the network 1 is installable, extends longitudinally.

It should be noted that in Figure 2 only one no-accommodation area vertical upright R1 is shown, comprising thereinside a sub-group A1 of no-accommodation area deck vertical distribution cabinets of the plurality of no-accommodation area deck vertical distribution cabinets 21.

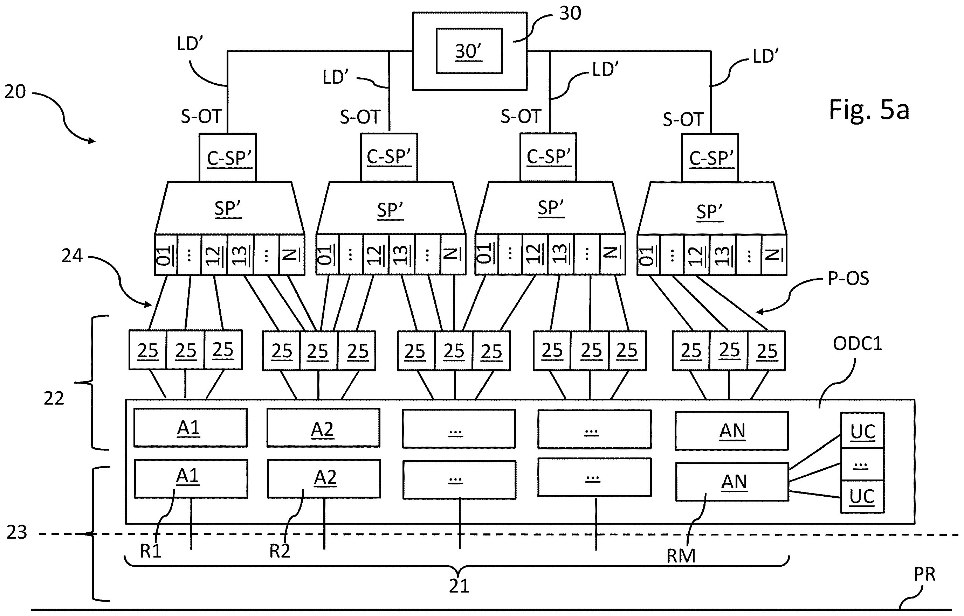

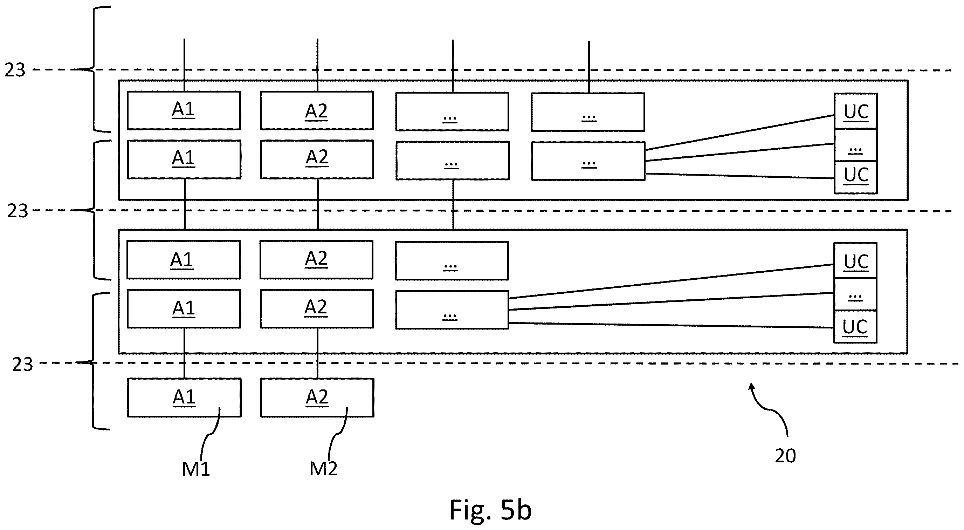

Figures 5a, 5b show five no-accommodation area vertical uprights R1, R2, ..., RM (being M=5), each comprising a respective sub-group, indicated with A1, A2, ..., AN (being N=5), of no-accommodation area deck distribution cabinets of said plurality of no-accommodation area distribution cabinets 21.

As shown in Figures 2 and 5a, a first cable 22 of each no-accommodation area vertical distribution upright R1-RM is operatively connected to the main distribution center 30 and ends on a first no-accommodation area deck distribution cabinet of a respective sub-group A1-AN of no-accommodation area deck distribution cabinets 21.

It should be noted that the first cable 22 of a no-accommodation area vertical distribution upright is also called ORFC, from the acronym Other Areas Riser First Cable.

The no-accommodation area deck distribution cabinets of a sub-group A1-SN of no-accommodation area deck distribution cabinets are interconnected with one another by means of respective further cables 23 of no-accommodation area vertical distribution upright chain in a chain configuration in series, called daisy chain physical configuration.

The further cables 23 of no-accommodation area vertical distribution upright chain vertically extend along a direction which is substantially perpendicular to the horizontal reference plane PR parallel to which the ship 100 extends longitudinally.

The further cables 23 of no-accommodation area vertical distribution upright chain are also called ORCC, from the acronym Other area Riser Chain Cable.

The further cables 23 of no-accommodation area vertical distribution upright chain are, for example, pre-connectorized 12 x MPO-MPO with a set number of optical fibers available, as it will be described below with a numerical example.

It should be noted that, as it will be reiterated below, any excess optical fibers may be considered as spare.

Each deck distribution cabinet of no-accommodation areas is adapted to distribute the optical signals to the utilities, indicated with reference numeral UT in Figure 2.

In greater detail, each utility UT comprises a respective connector (or interface) UC (of the SC type or of the LC type), from which to receive an optical signal, in turn connected to a respective optical network terminal apparatus ONT, downstream of which normal LAN utilities, for example TVs, Telephones, Cameras, Computers, WiFi Access Points or courtesy data sockets, may be connected.

As shown in Figures 5a and 5b, each utility corresponds to one or more connectors UC, of the SC type (Standard Connector) or of the LC type (Lucent Connector), each corresponding to a high-density network terminal apparatus ONT which supports a plurality of conventional LAN utilities.

Furthermore, as shown in Figures 5a and 5b, the at least one no-accommodation area local distribution network 10 may comprise several ODC groups, indicated with references ODC1-ODCN, each comprising one or more of the no-accommodation area vertical distribution cabinets of multiple no-accommodation area vertical distribution uprights.

In accordance with an embodiment, shown in Figure 5a, in combination with the preceding one, the at least one no-accommodation area local distribution network 20 comprises a plurality of splitters (optical dividers) SP' operatively connected to the main distribution center 30.

In greater detail, each splitter SP' is adapted to receive in input, by means of a respective connector C-SP' (or two connectors C-SP'), for example of the SC (Standard Connector) type or of the LC (Lucent Connector) type, a respective optical signal S-OT (or respective optical signals S-OT) distributed on a respective distribution line LD' by an optical line terminal 30' (OLT) of the main distribution central 30.

Each splitter SP' is adapted to divide the respective optical signal SOT (or the respective optical signals S-OT) received into a plurality of optical signals P-OS.

It should be noted that the division by each splitter SP' occurs according to a ratio 1:N, in the case of an input optical fiber (or 2:N in the case of two input optical fibers), for example, being N=16.

Figure 5a shows a splitter SP having a division ratio 1:N, with N=16.

The plurality of optical signals P-OS provided by the plurality of splitters SP' are spread over a plurality of optical fibers 24.

In accordance with an embodiment, in combination with the preceding one, still shown in Figure 5a, the at least one no-accommodation area local distribution network 20 further comprises a plurality of optical fiber grouping connections 25.

Each optical fiber grouping connection of said plurality 25, for example, a pre-connectorized cable with a plurality of connectors of the SC type or of the LC type on one end and a connector of the MPO type or of the MTP type at the other end, groups in a group a set number of optical fibers of the plurality of optical fibers 24.

In the example in which each splitter has a division ratio 1:16, each optical fiber grouping connection groups 12 optical fibers in a group.

In fact, in this example, the connection is a 12 optical fiber connection 12LC-MPO.

With reference again to the embodiment described, the plurality of optical fiber grouping connections 25 is, in turn, grouped into sub-groups, each inside the respective first cable 22 of a no-accommodation area vertical distribution upright R1-RM.

Each sub-group of optical fiber grouping connections of said plurality of connections 25 comprises a set number of connections.

Therefore, each cable 32 of a no-accommodation area vertical distribution upright M1-MM has a set number of optical fibers available thereinside.

In the example in which each splitter has a division ratio 1:16 and in which each optical fiber grouping connection groups a group of 12 optical fibers, each sub-group of optical fiber grouping connections groups, for example, 12 optical fiber grouping connections.

Therefore, according to this example, each cable 22 of a no-accommodation area vertical distribution upright R1-RM has a total number of 144 optical fibers available.

According to this example, the further cables 23 of no-accommodation area vertical distribution upright chain are, for example, pre-connectorized 12 x MPO-MPO or 12 x MTP-MTP with 144 optical fibers available.

Any excess optical fibers may be considered as spare.

With reference again, in general, to the at least one local cabin distribution network 10, as mentioned above, each horizontal cabin distribution point of said plurality 34 shows a technical cabin compartment in which a cabin distribution cabinet CDC is provided, in turn comprising an optical network terminal apparatus ONT.

Therefore, for each technical cabin compartment, the ports of an apparatus ONT are available, which, according to an embodiment, comprise 8 GE (PoE) ports and 2 POTS ports (which may also manage 3 telephones in parallel - same numbering).

A typical configuration of a shared technical room of the cabin may be the following:
- GE#1 TV cabin #1;
- GE#2 (PoE) WiFi cabin #1;
- GE#3 (PoE) on-line door lock cabin #1;
- GE#4 spare;
- GE#5 TV cabin #2;
- GE#6 (PoE) WiFi cabin #2;
- GE#7 (PoE) on-line door lock cabin #2;
- GE#8 spare;
- POTS#1 Telephones cabin #1 (up to 3 in parallel);
- POTS#2 Telephones cabin #2 (up to 3 in parallel).

Possibly, the spare ports may be used for VoIP telephony or up to two utilities in a corridor.

It should be noted that for the so-called fire zone/accommodation deck areas it is possible to use the spare optical fibers of the horizontal cabin distribution points (ONT apparatuses) or to introduce additional horizontal cabin distribution points (ONT apparatuses), connected to one another as described above with reference to the horizontal cabin distribution points (ONT apparatuses) in the technical cabin compartments, i.e., with chain connection in series (daisy chain configuration) in which a connection of an output optical fiber is towards a standard connector SC and the other output optical fibers are connected one after the other at the next horizontal cabin distribution point ONT.

Alternatively, it is possible (if the number of utilities is significant) to serve the utilities outside the cabin with a dedicated distribution from ODC apparatuses or with additional CDC apparatuses.

As mentioned above, another object of the present invention is a ship 100 comprising a telecommunications network 1 according to any of the embodiments described above.

It is worth noting that the object of the present invention is fully achieved.

The telecommunications network 1, also known as Fiber To Cabin (FTTC) network, is a passive optical network compatible with the ITU-T G.984.2 (GPON) and G.9807.1 (XG-PON and XGS-PON) standards which allow 1-1 0Gbps connectivity over single optical fiber.

The telecommunications network 1 has a daisy-chain physical configuration, but with a logic star with two logic levels (central OLT - periphery ONU/ONT - Utility).

The main advantages of the telecommunications network 1 are:
- reduction of cabling for accommodation areas (due to the presence of a plurality of spare optical fibers, it allows to have pre-arranged cabling available, ready for configuration;
- elimination (or at least minimization) of the presence of intermediate distribution frames (IDF) for the accommodation areas (due to the presence of horizontal cabin distribution points, ONT apparatuses);
- increased flexibility in the definition of utilities by area, in no-accommodation areas, allowing an even late definition of the final position/quantity of the utilities, since the availability of spare optical fibers on the vertical distribution uprights allows for the addition of ONT optical network terminal apparatuses under construction, requiring only the laying of local cables;
- maintenance or improvement of the performance with respect to a conventional telecommunications network.

Furthermore, taking into account the fact that the technologies considered are increasingly being used, it is possible to take advantage of evolutions which will probably not involve the network infrastructure but rather the electronics relying thereon, both in terms of performance and cost, since the new standards released so far maintain the same limit parameters as regards the passive infrastructure of the previous standards.

Finally, taking into account the scope in which the technologies are used, it is presumed that it will also be possible to take advantage of Cybersecurity solutions adopted by service providers, which presumably find themselves operating in contexts more sensitive to such issues, since the technology being used, employed on a larger scale, already addresses similar issues.

## Claims

1. A shipboard telecommunications network (1), said telecommunications network (1) having a chain physical configuration and a star logic configuration, said telecommunications network (1) comprising:
- at least one optical fiber accommodation area local distribution network (10) operatively connected to a main distribution center (30) of a plurality of main distribution centers of the network (1),
the at least one optical fiber accommodation area local distribution network (10) comprising:
- a plurality of cabin deck distribution points (31) divided into sub-groups (S1-SN), each sub-group (S1-SN) of cabin deck distribution points (31) being distributed along a cabin vertical distribution upright chain (M1-MM), said cabin vertical distribution upright chain (M1-MM) extending vertically along a direction which is substantially perpendicular to an horizontal reference plane (PR) parallel to which a ship (100), on which the network (1) is installable, extends longitudinally, a first cable (32) of each cabin vertical distribution upright chain (M1-MM) being operatively connected to the main distribution center (30) and ending on a first cabin deck distribution point of a respective sub-group (S1-SN) of cabin deck distribution points (31), the cabin deck distribution points of a sub-group of cabin deck distribution points being interconnected with one another by means of respective further cables (33) of cabin vertical distribution upright chain in a chain configuration in series, said further cables (33) of cabin vertical distribution upright chain vertically extending along a direction which is substantially perpendicular to the horizontal reference plane (PR) parallel to which the ship (100) extends longitudinally;
- at least one plurality (34) of horizontal cabin distribution points DO-CNⱼ, 1 < j < M, said plurality (34) of horizontal cabin distribution points DO-CNj, 1 < j < M, parallel extending with respect to the horizontal reference plane (PR) parallel to which the ship (100) extends longitudinally, each horizontal cabin distribution point DO-CNⱼ, 1 < j < M having a plurality of input optical fibers F-INᵢ, i < 1 < N, each entering a respective input connector of a plurality of input connectors C-INᵢ, 1 < i < N, and a second plurality of output optical fibers F-OTᵢ, 1 < i < N, each exiting a respective output connector of a plurality of output connectors C-OTᵢ, 1 < i < N,
the first horizontal cabin distribution point DO-CN₁ corresponding to one of the cabin deck distribution points (31) whose plurality of input optical fibers F-INᵢ, i < 1 < N, is adapted to receive respective optical signals (P-OS),
a horizontal cabin distribution point DO-CNⱼ, 1 < j < M, of said plurality (34) having:
- the first output optical fiber F-OT₁ connected to a connector (UC) of an utility (UT), arranged downstream so as to transport to the connector (UC) of an utility (UT) the optical signal received on the first input optical fiber FIN₁;
- each of the subsequent output optical fibers F-OTi, 2 < i < N, respectively connected to a respective input connector C-INᵢ₋₁, 2 < i < N, of the horizontal cabin distribution point, arranged downstream so as to transport to the input connector C-Inᵢ₋₁ of the horizontal cabin distribution point arranged downstream the optical signal received on the input optical fiber F-INᵢ, 1 < i < N.

2. A network (1) according to claim 1, wherein the at least one optical fiber accommodation area local distribution network (10) comprises a plurality of splitters (SP) operatively connected to the main distribution center (30), each splitter (SP) being adapted to receive in input a respective optical signal (S-OT) distributed on a respective optical fiber distribution line (LD) by an optical line terminal apparatus (30') of the main distribution center (30), each splitter being adapted to divide the optical signal (S-OT) received into a plurality of optical signals (P-OS), the plurality of optical signals (P-OS) provided by the plurality of splitters (SP) being distributed on a plurality of optical fibers (35).

3. A network (1) according to claim 2, wherein the at least one optical fiber accommodation area local distribution network (10) further comprises a plurality of optical fiber grouping connections (36), each optical fiber grouping connection of said plurality of connections (36) grouping in a group a set number of optical fibers of said plurality of optical fibers (35),
the plurality of optical fiber grouping connections (36) being grouped in sub-groups, each inside the respective first cable (32) of a cabin vertical distribution upright chain (M1-MM), each sub-group of optical fiber grouping connections of said plurality of connections (32) comprising a set number of connections.

4. A network (1) according to any one of the preceding claims, further comprising at least one no-accommodation area local distribution network (20), operatively connected to the main distribution center (30) of the plurality of network distribution centers (1), the at least one no-accommodation area local distribution network (20) comprising a plurality of no-accommodation area deck distribution cabinets (21) divided into sub-groups (A1-AN), each sub-group of no-accommodation area deck distribution cabinets being distributed along a no-accommodation area vertical distribution upright (R1-RM), said no-accommodation area vertical distribution upright (R1-RM) vertically extending along a direction which is substantially perpendicular to the horizontal reference plane (PR) parallel to which a ship (100), on which the network (1) is installable, extends longitudinally, a first cable (22) of each no-accommodation area vertical distribution upright (R1-RM) being operatively connected to the main distribution center (30) and ending on a first no-accommodation area deck distribution cabinet of a respective sub-group (A1-AN) of no-accommodation area deck distribution cabinets (21), the no-accommodation area deck distribution cabinets of a sub-group (A1-AN) of no-accommodation area deck distribution cabinets being interconnected with one another by means of respective further cables (23) of no-accommodation area vertical distribution upright chain in a chain configuration in series, said further cables (23) of no-accommodation area vertical distribution upright chain vertically extend along a direction which is substantially perpendicular to the horizontal reference plane (PR) parallel to which the ship (100) extends longitudinally.

5. A network (1) according to claim 4, wherein the at least one no-accommodation area local distribution network (20) comprises a plurality of splitters (SP') operatively connected to the main distribution center (30), each splitter (SP') being adapted to receive in input a respective optical signal (SOT) distributed on a respective distribution line (LD') by an optical line terminal apparatus (30') of the main distribution center (30), each splitter (SP') being adapted to divide the respective optical signal (S-OT) received into a plurality of optical signals (P-OS), the plurality of optical signals (P-OS) provided by the plurality of splitters (SP) being distributed on a plurality of optical fibers (24).

6. A network (1) according to claim 5, wherein the at least one no-accommodation area local distribution network (20) further comprises a plurality of optical fiber grouping connections (25), each optical fiber grouping connection of said plurality (25) grouping in a group a set number of optical fibers of the plurality of optical fibers (24),
the plurality of optical fiber grouping connections (25) being grouped in sub-groups, each inside the respective first cable (22) of a no-accommodation area vertical distribution upright (R1-RM), each sub-group of optical fiber grouping connections of said plurality of connections (25) comprising a set number of connections.

7. A ship (100) comprising a telecommunications network (1) according to any one of the preceding claims.

## Patentansprüche

1. Schiffbord-Telekommunikationsnetzwerk (1), wobei das Telekommunikationsnetzwerk (1) eine physikalische Kettenkonfiguration und eine logische Sternkonfiguration aufweist, das Telekommunikationsnetzwerk (1) umfassend:
- wenigstens ein optisches Faserunterbringungsbereich-Lokalverteilungsnetzwerk (10), welches mit einem Hauptverteilungszentrum (30) einer Mehrzahl von Hauptverteilungszentren des Netzwerks (1) betriebsfähig verbunden ist,
wobei das wenigstens eine optische Faserunterbringungsbereich-Lokalverteilungsnetzwerk (10) umfasst:
- eine Mehrzahl von Kabinendeck-Verteilungspunkten (31), welche in Untergruppen (S1 - SN) aufgeteilt sind, wobei jede Untergruppe (S1 - SN) von Kabinendeck-Verteilungspunkten (31) entlang einer Kabinenvertikalverteilungspfostenkette (M1 - MM) verteilt ist, wobei die Kabinenvertikalverteilungspfostenkette (M1 - MM) sich vertikal entlang einer Richtung erstreckt, welche im Wesentlichen senkrecht zu einer horizontalen Referenzebene (PR) ist, parallel zu welcher ein Schiff (100), auf welchem das Netzwerk (1) installierbar ist, sich longitudinal erstreckt, wobei ein erstes Kabel (32) von jeder Kabinenvertikalverteilungspfostenkette (M1 - MM) mit dem Hauptverteilungszentrum (30) betriebsfähig verbunden ist und an einem ersten Kabinendeck-Verteilungspunkt einer jeweiligen Untergruppe (S1 - SN) von Kabinendeck-Verteilungspunkten (31) endet, wobei die Kabinendeck-Verteilungspunkte einer Untergruppe von Kabinendeck-Verteilungspunkten mit Hilfe von jeweiligen weiteren Kabeln (33) einer Kabinenvertikalverteilungspfostenkette in einer Kettenkonfiguration in Serien miteinander zwischenverbunden sind, wobei die weiteren Kabel (33) einer Kabinenvertikalverteilungspfostenkette sich vertikal entlang einer Richtung erstrecken, welche im Wesentlichen senkrecht zu der horizontalen Referenzebene (PR) ist, parallel zu welcher das Schiff (100) sich longitudinal erstreckt;
- wenigstens eine Mehrzahl (34) von horizontalen Kabinenverteilungspunkten DO - CNⱼ, 1 < j < M, wobei die Mehrzahl (34) von horizontalen Kabinenverteilungspunkten DO - CNⱼ, 1 < j < M, sich mit Bezug zu der horizontalen Referenzebene (PR) parallel erstreckt, parallel zu welcher das Schiff (100) sich longitudinal erstreckt, wobei jeder horizontale Kabinenverteilungspunkt DO - CNⱼ, 1 < j < M, eine Mehrzahl von optischen Eingabefasern F - INᵢ, i < 1 < N, wobei jedes in einen jeweiligen Eingabe-Konnektor einer Mehrzahl von Eingabe-Konnektoren C - INᵢ, 1 < i < N, eintritt, und eine zweite Mehrzahl von optischen Ausgabefasern F - OTᵢ, 1 < i < N, aufweist, wobei jedes aus einem jeweiligen Ausgabe-Konnektor einer Mehrzahl von Ausgabe-Konnektoren C - OTᵢ, 1 < i < N, austritt,
wobei der erste horizontale Kabinenverteilungspunkt DO - CN₁ einem der Kabinendeckverteilungspunkte (31) entspricht, dessen Mehrzahl von optischen Eingabefasern F - INᵢ, i < 1 < N, dazu eingerichtet ist, jeweilige optische Signale (P - OS) zu empfangen,
wobei ein horizontaler Kabinenverteilungspunkt DO - CNj, 1 < j < M, der Mehrzahl (34) aufweist:
- die erste optische Ausgabefaser F - OT₁, welche mit einem Konnektor (UC) einer Versorgungseinrichtung (UT) verbunden ist, welche stromabwärts angeordnet ist, um so zu dem Konnektor (UC) einer Versorgungsvorrichtung (UT) das optische Signal zu transportieren, welches an der ersten optischen Eingabefaser F - IN₁ empfangen ist;
- jedes der aufeinanderfolgenden optischen Ausgabefasern F - OTᵢ, 2 < i < N, welche jeweils mit einem jeweiligen Eingabe-Konnektor C - INi-₁, 2 < i < N, des horizontalen Kabinenverteilungspunktes verbunden ist, welcher stromabwärts angeordnet ist, um so zu dem Eingabe-Konnektor C - Inᵢ₋₁ des horizontalen Kabinenverteilungspunktes, welcher stromabwärts angeordnet ist, das optische Signal zu transportieren, welches an der optischen Eingabefaser F - INᵢ, 1 < i < N, empfangen ist.

2. Netzwerk (1) nach Anspruch 1, wobei das wenigstens eine optische Faserunterbringungsbereich-Lokalverteilungsnetzwerk (10) eine Mehrzahl von Splittern (SP) umfasst, welche mit dem Hauptverteilungszentrum (30) betriebsfähig verbunden sind, wobei jeder Splitter (SP) dazu eingerichtet ist, in einer Eingabe ein jeweiliges optisches Signal (S - OT) zu erhalten, welches an einer jeweiligen optischen Faserverteilungslinie (LD) durch eine optische Linienanschlussvorrichtung (30') des Hauptverteilungszentrums (30) verteilt wird, wobei jeder Splitter dazu eingerichtet ist, das erhaltene optische Signal (S - OT) in eine Mehrzahl von optischen Signalen (P - OS) aufzuteilen, wobei die Mehrzahl von optischen Signalen (P - OS), welche durch die Mehrzahl von Splittern (SP) bereitgestellt sind, an einer Mehrzahl von optischen Fasern (35) verteilt sind.

3. Netzwerk (1) nach Anspruch 2, wobei das wenigstens eine optische Faserunterbringungsbereich-Lokalverteilungsnetzwerk (10) ferner eine Mehrzahl von optischen Fasergruppierungsverbindungen (36) umfasst, wobei jede optische Fasergruppierungsverbindung der Mehrzahl von Verbindungen (36) eine festgesetzte Anzahl von optischen Fasern der Mehrzahl von optischen Fasern (35) in eine Gruppe gruppiert,
wobei die Mehrzahl von optischen Fasergruppierungsverbindungen (36) in Untergruppen gruppiert sind, jeweils in dem jeweiligen ersten Kabel (32) einer Kabinenvertikalverteilungspfostenkette (M1 - MM), wobei jede Untergruppe von optischen Fasergruppierungsverbindungen der Mehrzahl von Verbindungen (32) eine festgesetzte Anzahl an Verbindungen umfasst.

4. Netzwerk (1) nach einem der vorhergehenden Ansprüche, ferner umfassend wenigstens ein Nichtunterbringungsbereich-Lokalverteilungsnetzwerk (20), welches mit dem Hauptverteilungszentrum (30) der Mehrzahl von Netzwerkverteilungszentren (1) betriebsfähig verbunden ist, wobei das wenigstens eine Nichtunterbringungsbereich-Lokalverteilungsnetzwerk (20) eine Mehrzahl von Nichtunterbringungsbereich-Deckverteilungsschränken (21) umfasst, welche in Untergruppen (A1 - AN) aufgeteilt sind, wobei jede Untergruppe von Nichtunterbringungsbereich-Deckverteilungsschränken entlang eines Nichtunterbringungsbereich-Vertikalverteilungspfostens (R1 - RM) verteilt ist, wobei der Nichtunterbringungsbereich-Vertikalverteilungspfosten (R1 - RM) sich entlang einer Richtung vertikal erstreckt, welche im Wesentlichen senkrecht zu der horizontalen Referenzebene (PR) ist, parallel zu welcher ein Schiff (100), auf welchem das Netzwerk (1) installierbar ist, sich longitudinal erstreckt, wobei ein erstes Kabel (22) jedes Nichtunterbringungsbereich-Vertikalverteilungspfostens (R1 - RM) mit dem Hauptverteilungszentrum (30) betriebsfähig verbunden ist und an einem ersten Nichtunterbringungsbereich-Deckverteilungsschrank einer jeweiligen Untergruppe (A1 - AN) von Nichtunterbringungsbereich-Deckverteilungsschränken (21) endet, wobei die Nichtunterbringungsbereich-Deckverteilungsschränke einer Untergruppe (A1 - AN) von Nichtunterbringungsbereich-Deckverteilungsschränken mit Hilfe von jeweiligen weiteren Kabeln (23) einer Nichtunterbringungsbereich-Vertikalverteilungspfostenkette in einer Kettenkonfiguration in Serien miteinander zwischenverbunden sind, wobei die weiteren Kabel (23) einer Nichtunterbringungsbereich-Vertikalverteilungspfostenkette sich vertikal entlang einer Richtung erstrecken, welche im Wesentlichen senkrecht zu der horizontalen Referenzebene (PR) ist, parallel zu welcher das Schiff (100) sich longitudinal erstreckt.

5. Netzwerk (1) nach Anspruch 4, wobei das wenigstens eine Nichtunterbringungsbereich-Lokalverteilungsnetzwerk (20) eine Mehrzahl von Splittern (SP') umfasst, welche mit dem Hauptverteilungszentrum (30) betriebsfähig verbunden sind, wobei jeder Splitter (SP') dazu eingerichtet ist, in einer Eingabe ein jeweiliges optisches Signal (S - OT) zu erhalten, welches an einer jeweiligen optischen Verteilungslinie (LD`) durch eine optische Linienanschlussvorrichtung (30') des Hauptverteilungszentrums (30) verteilt wird, wobei jeder Splitter (SP') dazu eingerichtet ist, das entsprechende erhaltene optische Signal (S - OT) in eine Mehrzahl von optischen Signalen (P - OS) aufzuteilen, wobei die Mehrzahl von optischen Signalen (P - OS), welche durch die Mehrzahl von Splittern (SP) bereitgestellt sind, an einer Mehrzahl von optischen Fasern (24) verteilt sind.

6. Netzwerk (1) nach Anspruch 5, wobei das wenigstens eine Nichtunterbringungsbereich-Lokalverteilungsnetzwerk (20) ferner eine Mehrzahl von optischen Fasergruppierungsverbindungen (25) umfasst, wobei jede optische Fasergruppierungsverbindung der Mehrzahl (25) eine festgesetzte Anzahl von optischen Fasern der Mehrzahl von optischen Fasern (24) in eine Gruppe gruppiert,
wobei die Mehrzahl von optischen Fasergruppierungsverbindungen (25) in Untergruppen gruppiert sind, jeweils in dem jeweiligen ersten Kabel (22) eines Nichtunterbringungsbereich-Vertikalverteilungspfostens (R1 - RM), wobei jede Untergruppe von optischen Fasergruppierungsverbindungen der Mehrzahl von Verbindungen (25) eine festgesetzte Anzahl an Verbindungen umfasst.

7. Schiff (100), welches ein Telekommunikationsnetzwerk (1) nach einem der vorhergehenden Ansprüche umfasst.

## Revendications

1. Réseau de télécommunications embarqué (1), ledit réseau de télécommunications (1) ayant une configuration physique en chaîne et une configuration logique en étoile, ledit réseau de télécommunications (1) comprenant :
- au moins un réseau de distribution local de zone d'hébergement par fibre optique (10) connecté en fonctionnement à un centre de distribution principale (30) d'une pluralité de centres de distribution principale du réseau (1),
ledit au moins un réseau de distribution locale de zone d'hébergement par fibre optique (10) comprenant :
- une pluralité de points de distribution de pont de cabine (31) divisés en sous-groupes (S 1-SN), chaque sous-groupe (S1-SN) des points de distribution de pont de cabine (31) étant distribué le long d'une chaîne verticale de distribution verticale de cabine (M1-MM), ladite chaîne verticale de distribution verticale de cabine (M1-MM) s'étendant verticalement suivant une direction qui est sensiblement perpendiculaire à un plan de référence horizontal (PR) parallèlement auquel un navire (100), sur lequel le réseau (1) peut être installé, s'étend longitudinalement, un premier câble (32) de chaque chaîne verticale de distribution verticale de cabine (M1-MM) étant connecté en fonctionnement au centre de distribution principal (30) et terminant sur un premier point de distribution de pont de cabine d'un sous-groupe respectif (S 1-SN) de points de distribution de pont de cabine (31), les points de distribution de pont de cabine d'un sous-groupe de points de distribution de pont de cabine étant interconnectés entre eux au moyen d'autres câbles (33) respectifs de chaîne verticale de distribution verticale de cabine dans une configuration de chaîne en série, lesdits autres câbles (33) de chaîne verticale de distribution verticale de cabine s'étendant verticalement suivant une direction qui est sensiblement perpendiculaire au plan de référence horizontal (PR) parallèlement auquel le navire (100) s'étend longitudinalement ;
- au moins une pluralité (34) de points de distribution de cabine horizontale DO-CNⱼ, 1 < j < M, ladite pluralité (34) de points de distribution de cabine horizontale DO-CNⱼ, 1 < j < M, s'étendant parallèlement par rapport au plan de référence horizontal (PR) parallèlement auquel le navire (100) s'étend longitudinalement, chaque point de distribution de cabine horizontale DO-CNⱼ, 1 < j < M ayant une pluralité de fibres optiques d'entrée F-INᵢ, i < 1 <N, chacune entrant dans un connecteur d'entrée respectif d'une pluralité de connecteurs d'entrée C-INᵢ, 1 < i <N, et une seconde pluralité de fibres optiques de sortie F-OTᵢ, 1 < i <N, chacune sortant d'un connecteur de sortie respectif d'une pluralité de connecteurs de sortie C-OTᵢ, 1 < i <N,
le premier point de distribution de cabine horizontale DO-CN₁ correspondant à un des points de distribution de pont de cabine (31) dont la pluralité de fibres optiques d'entrée F-INᵢ, i < 1 <N, est adaptée pour recevoir des signaux optiques (P-OS) respectifs,
un point de distribution de cabine horizontale DO-CNⱼ, 1 < j < M, de ladite pluralité (34) ayant :
- la première fibre optique de sortie F-OT₁ connectée à un connecteur (UC) d'un utilitaire (UT), disposée en aval de manière à transporter au connecteur (UC) d'un utilitaire (UT) le signal optique reçu sur la fibre optique d'entrée F-IN₁ ;
- chacune des fibres optiques de sortie subséquentes F-OTᵢ, 2 < i <N, connectée respectivement à un connecteur d'entrée respectif C-INᵢ₋₁, 2 < i <N, du point de distribution de cabine horizontale, disposée en aval de manière à transporter au connecteur d'entrée C-INᵢ₋₁ du point de distribution de cabine horizontale disposé en aval le signal optique reçu sur la fibre optique d'entrée F-INᵢ, 1 < i <N.

2. Réseau (1) selon la revendication 1, dans lequel ledit au moins un réseau de distribution locale de zone d'hébergement par fibre optique (10) comprend une pluralité de diviseurs (SP) connectés en fonctionnement au centre de distribution principale (30), chaque diviseur (SP) étant adapté pour recevoir en entrée un signal optique (S-OT) respectif distribué sur une ligne de distribution à fibre optique respective (LD) par un appareil terminal de ligne optique (30') du centre de distribution principale (30), chaque diviseur étant adapté pour diviser le signal optique (S-OT) reçu en une pluralité de signaux optiques (P-OS), la pluralité de signaux optiques (P-OS) fournie par la pluralité de diviseurs (SP) étant distribuée sur une pluralité de fibres optiques (35).

3. Réseau (1) selon la revendication 2, dans lequel ledit au moins un réseau de distribution locale de zone d'hébergement par fibre optique (10) comprend en outre une pluralité de connexions de groupement de fibres optiques (36), chaque connexion de groupement de fibres optiques de ladite pluralité de connexions (36) groupant en un groupe un nombre défini de fibres optiques de ladite pluralité de fibres optiques (35),
la pluralité de connexions de groupement de fibres optiques (36) étant groupée en sous-groupes, chacun à l'intérieur du premier câble respectif (32) d'une chaîne verticale de distribution verticale de cabine (M1-MM), chaque sous-groupe de connexions de groupement de fibres optiques de ladite pluralité de connexions (32) comprenant un nombre défini de connexions.

4. Réseau (1) selon l'une quelconque des revendications précédentes, comprenant en outre au moins un réseau de distribution locale de zone de non-hébergement (20) connecté en fonctionnement au centre de distribution principale (30) de la pluralité de centres de distribution principale du réseau (1), ledit au moins un réseau de distribution locale de zone de non-hébergement (20) comprenant une pluralité d'armoires de distribution de pont de zone de non-hébergement (21) divisées en sous-groupes (A1-AN), chaque sous-groupe d'armoires de distribution de pont de zone de non-hébergement étant distribué le long d'un montant de distribution verticale de zone de non-hébergement (R1-RM), ledit montant de distribution verticale de zone de non-hébergement (R1-RM) s'étendant verticalement suivant une direction qui est sensiblement perpendiculaire au plan de référence horizontal (PR) parallèlement auquel un navire (100), sur lequel le réseau (1) peut être installé, s'étend longitudinalement, un premier câble (22) de chaque montant de distribution verticale de zone de non-hébergement (R1-RM) étant connecté en fonctionnement au centre de distribution principal (30) et terminant sur une première armoire de distribution de pont de zone de non-hébergement d'un sous-groupe respectif (A1-AN) d'armoires de distribution de pont de zone de non-hébergement (21), les armoires de distribution de pont de zone de non-hébergement d'un sous-groupe (A1-AN) d'armoires de distribution de pont de zone de non-hébergement étant interconnectées entre elles au moyen d'autres câbles (23) respectifs de chaîne verticale de distribution verticale de zone de non-hébergement dans une configuration de chaîne en série, lesdits autres câbles (23) de chaîne verticale de distribution verticale de zone de non-hébergement s'étendent verticalement suivant une direction qui est sensiblement perpendiculaire au plan de référence horizontal (PR) parallèlement auquel le navire (100) s'étend longitudinalement.

5. Réseau (1) selon la revendication 4, dans lequel ledit au moins un réseau de distribution locale de zone de non-hébergement (20) comprend une pluralité de diviseurs (SP') connectés en fonctionnement au centre de distribution principale (30), chaque diviseur (SP') étant adapté pour recevoir en entrée un signal optique respectif (S-OT) distribué sur une ligne de distribution respective (LD') par un appareil terminal de ligne optique (30') du centre de distribution principale (30), chaque diviseur (SP') étant adapté pour diviser le signal optique respectif (S-OT) reçu en une pluralité de signaux optiques (P-OS), la pluralité de signaux optiques (P-OS) fournie par la pluralité de diviseurs (SP) étant distribuée sur une pluralité de fibres optiques (24).

6. Réseau (1) selon la revendication 5, dans lequel ledit au moins un réseau de distribution locale de zone de non-hébergement (20) comprend en outre une pluralité de connexions de groupement de fibres optiques (25), chaque connexion de groupement de fibres optiques de ladite pluralité (25) groupant en un groupe un nombre défini de fibres optiques de la pluralité de fibres optiques (24),
la pluralité de connexions de groupement de fibres optiques (25) étant groupée en sous-groupes, chacun à l'intérieur du premier câble respectif (22) d'un montant de distribution verticale de zone de non-hébergement (R1-RM), chaque sous-groupe de connexions de groupement de fibres optiques de ladite pluralité de connexions (25) comprenant un nombre défini de connexions.

7. Navire (100) comprenant un réseau de télécommunications (1) selon l'une quelconque des revendications précédentes.
